# EUROPÄISCHE PATENTSCHRIFT

(11) **EP 0 930 209 B1**
(45) Veröffentlichungstag und Bekanntmachung des Hinweises auf die Patenterteilung: **26.11.2003**
(21) Anmeldenummer: 99100437.5
(22) Anmeldetag: 11.01.1999
(51) Int. Cl.: B61D 37/00, B60N 3/00

(54) **Fahrgasttisch, insbesondere für Schienefahrzeuge**
Table for passengers, especially for railway vehicles
Table pour passagers, notamment pour véhicules ferroviaires

(30) Priorität: 19.01.1998 DE 19801691
(43) Veröffentlichungstag der Anmeldung: 21.07.1999
(73) Patentinhaber: SIEMENS AKTIENGESELLSCHAFT, 80333 München (DE)
(72) Erfinder: Börgardts, Willi, 47798 Krefeld (DE); Weiler, Joachim, 53498 Gönnersdorf (DE)

(56) Entgegenhaltungen:
- DE-A- 3 613 530
- DE-U- 8 705 173
- US-A- 5 240 215

## Beschreibung

Die Erfindung betrifft einen Fahrgasttisch, insbesondere für Schienenfahrzeuge, der eine gegenüber einer Fahrzeugwand gehaltene Tischplatte aufweist.

Ein derartiger Fahrgasttisch ist beispielsweise bei Schienenfahrzeugen häufig in der Mitte zwischen zwei vis-a-vis angeordneten Fahrgastsitzen freitragend an der Fahrzeugwand befestigt. Dabei befindet sich die Tischplatte in einer Höhenlage, die auf die durchschnittliche Körpergröße von Fahrgästen abgestimmt ist. Dies bedeutet zwangsläufig für besonders große oder kleine Fahrgäste eine zu tiefe bzw. zu hohe Platzierung der Tischplatte. Ein weiterer Nachteil liegt darin, dass die Tischplatte das Manövrieren behinderter Fahrgäste mit Rollstühlen stört, wobei Rollstühle grundsätzlich höher sind als übliche Fahrgastsitze.

Durch das Dokument DE-U-87 05 173 ist es bei einem Fahrzeugtisch bekannt, die Tischplatte mit einer Halterung zu verbinden und diese an einer fahrzeugseitig befestigten Stange in der Höhe stufenlos verschiebbar zu lagem. Dem Arretieren der Tischplatte in der jeweils gewünschten Höhe dient eine Klemmschraube, die eine Gewindebohrung der Halterung durchdringt und eine Druckkraft auf die Stange ausübt. Diese Tischkonstruktion ist für eine rein manuelle Bedienung ausgelegt.

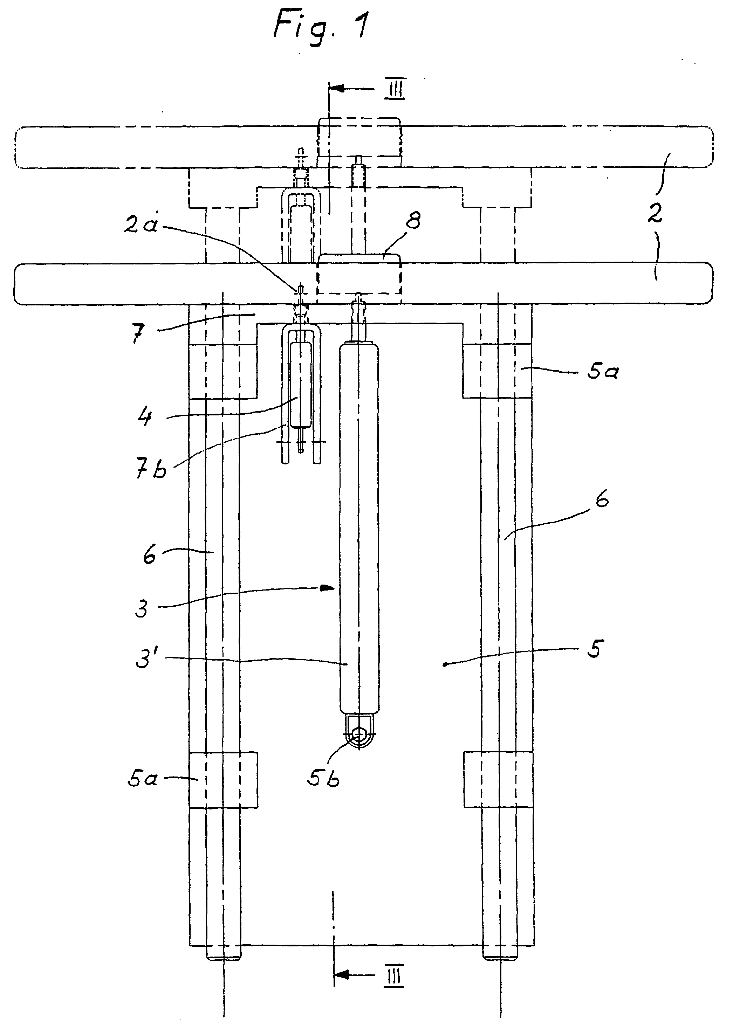

Zum Stand der Technik gehört femer ein durch die US-A-5 240 215 bekannter Fahrzeugtisch, bei dem die Tischplatte mit zwei Halterungen verbunden ist (siehe Fig. 1 bis 3). Jede dieser Halterungen ist über ein Gleitstück innerhalb eines fahrzeugfesten quadratischen Rohres höhenverstellbar geführt. Die Gleitstücke der Halterungen und die Rohre weisen jeweils korrespondierende Bohrungen auf, in die Bolzen einsetzbar sind. Mit Hilfe der Bolzen ist es möglich, die Tischplatte in unterschiedlich hohen, dem Abstand der Bohrungen entsprechenden Stellungen zu fixieren. Innerhalb der Rohre angeordnete Druckfedern wirken mit einer aufwärts gerichteten Kraft auf die Gleitstücke, um das unter Umständen erhebliche Gewicht von Gegenständen zu kompensieren, die auf der Tischplatte stehen (bei US-A-5 240 215 insbesondere ein Computer mit Bildschirm). Diese Bauweise eines Fahrzeugtisches ermöglicht keine stufenlose Verstellungen der Tischplatte und ist ebenfalls für eine manuelle Bedienung ausgelegt.

Der Erfindung liegt die Aufgabe zugrunde, einen Fahrgasttisch so zu gestalten, dass die vorgenannten Nachteile beseitigt sind; vor allem Rollstuhlfahrern soll ein bequem nutzbarer Tisch zur Verfügung stehen und ausreichend Raum für das Manövrieren geboten werden, wobei Verstellungen der Tischplatte bequem und ohne größeren Kraftaufwand möglich sein sollen.

Diese Aufgabe wird erfindungsgemäß dadurch gelöst, dass die Hebevorrichtung der Tischplatte durch eine blockierbare Gasdruckfeder gebildet ist.

Nach einer bevorzugten Ausgestaltung der Erfindung ist die Tischplatte in Richtung auf die Fahrzeugwand hochschwenkbar, wobei die Tischplatte in ihren beiden Schwenk-Endstellungen durch einen Gasdruckdämpfer fixiert wird, der außerdem bei den Schwenkbewegungen der Tischplatte eine bremsende Funktion ausübt.

Im weiteren wird die Erfindung anhand eines Ausführungsbeispiels näher beschrieben, das in der Zeichnung prinzipartig dargestellt ist. Es zeigen
- Fig. 1: einen Fahrgasttisch in Vorderansicht,
- Fig. 2: eine Seitenansicht zu Fig. 1,
- Fig. 3: den Schnitt nach der Linie III-III in Fig. 1.

Für das Anbringen des Fahrgasttisches an einer Fahrzeugwand 1 ist eine Konsole 5 vorgesehen, die Lagerungen 5a für zwei Führungsstangen 6 aufweist. Diese Führungsstangen 6 sind mit einem Tragelement 7 verbunden, an dem eine Tischplatte 2 um seitlich angeordnete Drehachsen 7a hochschwenkbar gehalten ist. Die Konsole 5 hat weiter einen Festpunkt 5b zum Anschluß einer Hebevorrichtung 3, die andererseits am Tragelement 7 angreift. Als Hebevorrichtung 3 ist im Ausführungsbeispiel eine blockierbare Gasdruckfeder 3' vorgesehen; alternativ kommen ein Hydraulik- oder Pneumatikzylinder mit jeweils externer Druckquelle, eine elektrisch angetriebene Gewindespindel mit Mutter oder eine pneumatische Lösung mit einer Kombination von Zugfeder und Druckfeder in Betracht.

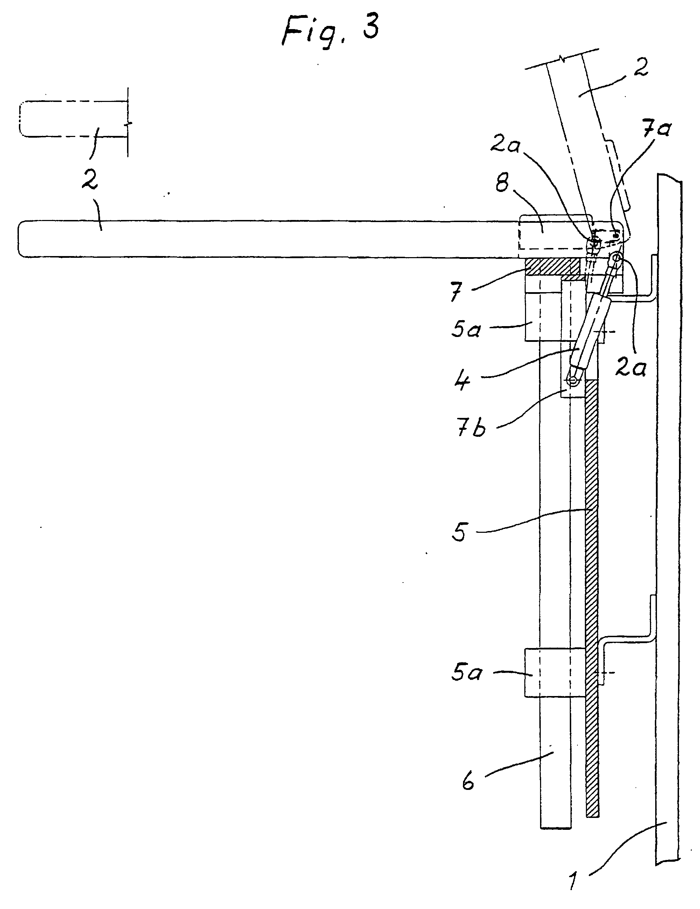

An den Schenkeln einer U-förmigen Halterung 7b des Tragelements 7 ist ein Ende eines Gasdruckdämpfers 4 befestigt, dessen anderes Ende mit der Tischplatte 2 derart verbunden ist, daß zwischen der Anlenkachse 2a des Gasdruckdämpfers 4 und den Drehachsen 7a der Tischplatte 2 ein Hebelarm besteht (siehe Fig. 3).

Die Konsole 5, die Führungsstangen 6, die Gasdruckfeder 3' sowie der Gasdruckdämpfer 4 werden durch eine Verkleidung abgedeckt, die hier der Übersichtlichkeit halber weggelassen ist.

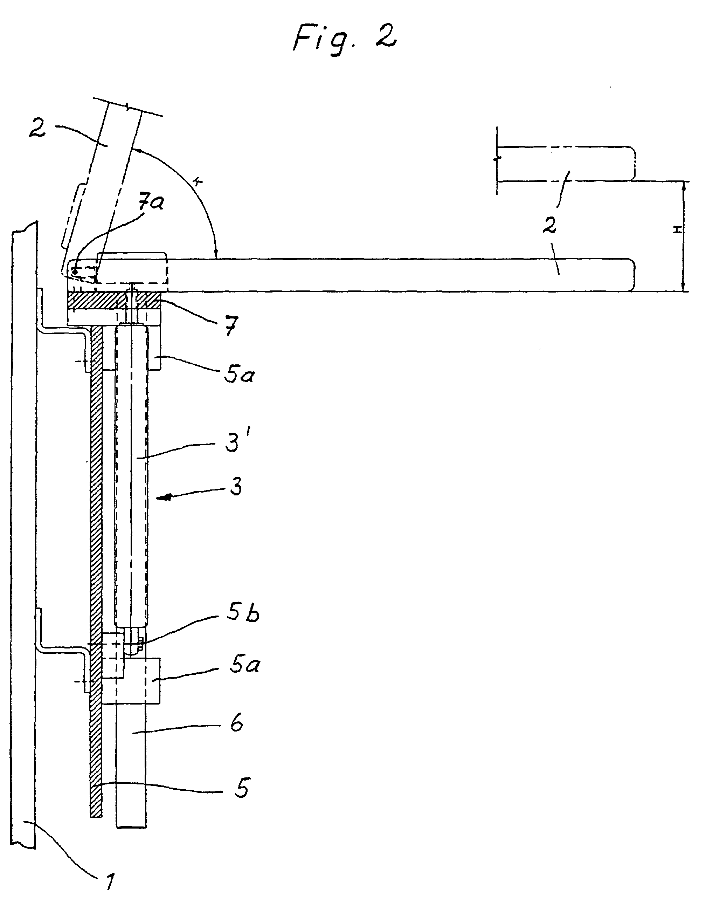

Die blockierbare Gasdruckfeder 3' wirkt mit einer aufwärts gerichteten Kraft auf das Tragelement 7 und die Tischplatte 2. Diese Kraft ist unter Berücksichtigung insbesondere der Gewichtskräfte von Tischplatte 2, Tragelement 7 und Führungsstangen 6 sowie der Reibungskräfte zwischen Lagerungen 5a und Führungsstangen 6 so groß gewählt, daß durch manuelles Betätigen beispielsweise eines Drucktasters 8, der die Blockierung der Gasdruckfeder 3' aufhebt bzw. aktiviert, die Tischplatte 2 zuverlässig stufenlose Hubbewegungen ausführt. Der maximale Hubweg H ist in Fig. 2 angegeben. Die Kraft der Gasdruckfeder 3' ist jedoch nur so groß, daß ein Hinunterdrücken der angehobenen Tischplatte 2 durch normale Handkräfte bequem möglich ist.

Um den bereits bei angehobener Tischplatte 2 geschaffenen Platz für das Manövrieren eines Rollstuhlfahrers noch zu vergrößern, wird die Tischplatte 2 um das Winkelmaß K hochgeschwenkt. Durch den Hebelarm zwischen der Anlenkachse 2a des Gasdruckdämpfers 4 und den Drehachsen 7a der Tischplatte 2 fixiert der Gasdruckdämpfer 4 die Tischplatte 2 in ihrer jeweiligen horizontalen Stellung und in ihrer hochgeschwenkten Position. Der Gasdruckdämpfer 4 übt außerdem bei den Schwenkbewegungen der Tischplatte 2 eine bremsende Funktion aus; er verhindert insbesondere ein zu schnelles Hinunterschwenken (Hinunterfallen) der Tischplatte 2.

### Liste der Bezugszeichen

- 1: Fahrzeugwand
- 2: Tischplatte
- 2a: Anlenkachse
- 3: Hebevorrichtung
- 3': Gasdruckfeder
- 4: Gasdruckdämpfer
- 5: Konsole
- 5a: Lagerungen
- 5b: Festpunkt
- 6: Führungsstange
- 7: Tragelement
- 7a: Drehachsen
- 7b: Halterung
- 8: Drucktaster
- H: maximaler Hubweg
- K: Schwenkwinkel

## Patentansprüche

1. Fahrgasttisch, insbesondere für Schienenfahrzeuge, der eine gegenüber einer Fahrzeugwand (1) gehaltene Tischplatte (2) aufweist, welche mit Hilfe einer Hebevorrichtung (3) in ihrer Höhe stufenlos verstellbar ist, **dadurch gekennzeichnet, dass** die Hebevorrichtung durch eine blockierbare Gasdruckfeder (3') gebildet ist.

2. Fahrgasttisch nach Anspruch 1, **dadurch gekennzeichnet, dass** die Tischplatte (2) in Richtung auf die Fahrzeugwand (1) hochschwenkbar ist, wobei die Tischplatte (2) in ihren beiden Schwenk-Endstellungen durch einen Gasdruckdämpfer (4) fixiert wird, der außerdem bei den Schwenkbewegungen der Tischplatte (2) eine bremsende Funktion ausübt.

## Claims

1. Passenger table, in particular for rail vehicles, which has a table top (2) which is held with respect to a vehicle wall (1) and is infinitely adjustable in its height with the aid of a lifting device (3), **characterized in that** the lifting device is formed by a blockable gas-filled compression spring (3').

2. Passenger table according to Claim 1, **characterized in that** the table top (2) can be pivoted upwards in the direction of the vehicle wall (1), the table top (2) being fixed in its two end pivoting positions by a gas-filled compression damper (4) which also exerts a braking function during the pivoting movements of the table top (2).

## Revendications

1. Table de passager, en particulier pour des véhicules sur rails, qui présente une tablette (2) laquelle est maintenue par rapport à une paroi de véhicule (1) et peut être réglée en continu quant à sa hauteur à l'aide d'un dispositif de levage (3),
**caractérisée en ce que** le dispositif de levage est formé par un ressort à pression de gaz (3') qui peut se bloquer.

2. Table de passager selon la revendication 1, **caractérisée en ce que** la tablette (2) peut être basculée vers le haut en direction de la paroi de véhicule (1 ), la tablette (2) étant maintenue dans ses deux positions finales de basculement par un amortisseur à pression de gaz (4) qui exerce en outre une fonction de freinage lors des mouvements de bascule de la tablette (2).
